# EUROPÄISCHE PATENTSCHRIFT

(11) **EP 1 076 590 B1**
(45) Veröffentlichungstag und Bekanntmachung des Hinweises auf die Patenterteilung: **11.10.2006**
(21) Anmeldenummer: 00925028.3
(22) Anmeldetag: 06.03.2000
(51) Int. Cl.: A63H 27/00, B64C 11/06, B63H 3/02

(54) **LUFTSCHRAUBE, INSBESONDERE FUR MODELLFLUZEUGE**
PROPELLER, ESPECIALLY FOR MODEL AIRPLANES
HELICE, EN PARTICULIER POUR MODELES REDUITS D'AVIONS

(30) Priorität: 05.03.1999 DE 19909818
(43) Veröffentlichungstag der Anmeldung: 21.02.2001
(73) Patentinhaber: Ramoser, Christian, 86916 Kaufering (DE)
(72) Erfinder: Ramoser, Christian, 86916 Kaufering (DE)
(74) Vertreter: Kleinschmidt, Michael
(86) Internationale Anmeldenummer: PCT/DE2000/000701
(87) Internationale Veröffentlichungsnummer: WO 2000/051700

(56) Entgegenhaltungen:
- DE-A- 2 653 460
- DE-A- 3 901 672
- GB-A- 2 140 096

## Beschreibung

Die vorliegende Erfindung bezieht sich auf eine bezüglich des Anstellwinkels verstellbare Luftschraube, insbesondere für Modellflugzeuge.

Eine bekannte Methode zur Erzeugung eines Vortriebes ist - neben einer Düse - der Einsatz von Luftschrauben. Luftschrauben sind aber in ihrem Leistungsspektrum grundsätzlich dadurch eingeschränkt, dass bei hoher Leistungsabgabe und damit bei hohen Drehzahlen die Geschwindigkeit der Spitzen der Luftschraube einen hohen Wert einnehmen können und sogar an die - bezüglich der Lärmemission und der Materialbelastung - unerwünschte Schallgeschwindigkeit heranreichen können. Grundsätzlich kann diesem Problem dadurch begegnet werden, dass die Drehzahl niedrig gehalten und die hohe Leistung durch einen großen Einstellwinkel der Flügel der Luftschraube und/oder durch eine Erhöhung der Zahl der Flügel - ausgehend von zwei - erreicht wird.

Im Modellbau gibt es aber - gemessen an den vorstehend genannten Überlegungen - weitere Randbedingungen, die eingehalten werden müssen. Einerseits darf für ein Modellflugzeug oder eine ähnliche einfache Anwendung einer Luftschraube der Aufwand zur Herstellung eines solchen nicht allzu groß sein, um noch im Verhältnis zum Zweck zu stehen. Andererseits aber muss die Luftschraube robust sein, da es bei diesen Einsätzen gelegentlich zu Berührungen der rotierenden Luftschraube - insbesondere mit dem Erdboden - kommen kann. In einem solchen Fall soll die Luftschraube nicht bzw. nicht vollständig zerstört werden.

Im Modellbau - und dabei insbesondere bei den Flugzeugmodellen - ist der Einsatz von Zweiblattluftschrauben üblich. Gelegentlich kommen auch Drei- und Vierblattluftschrauben zum Einsatz, die dann - ebenso wie die Zweiblattluftschrauben - aus einem Teil, z.B. aus mit Glasfaser verstärktem Polyester, Polyamid, aus ABS, aus Holz, aus Metall oder einem anderen Werkstoff gefertigt sind. Diesen Luftschrauben hängt zunächst einmal der Mangel an, dass bei einer Bodenberührung - wenn dabei ein Flügel abreißt oder z.B. an der Spitze beschädigt wird, die gesamte Luftschraube unbrauchbar ist.

Im Modellbau und bei ähnlichen Einsatzgebieten einer Luftschraube gibt es aber noch ein anderes Problem. Während es nämlich bei der Konstruktion und beim Bau eines bemannten Flugzeuges (z.B. Sportflugzeuges) schon aus zulassungsrechtlichen Gründen üblich ist, dass eine Luftschraube zusammen mit dem Triebwerk und der Flugzeugzelle zertifiziert wird und damit spezifisch für diese Kombination zur Verfügung steht, ist der Modellbau darauf angewiesen, für die individuelle - meistens als Einzelstück aus Liebhaberei angefertigte - Zelle einen marktüblichen Motor einzusetzen und somit noch einen Abstimmbedarf für die Luftschraube - insbesondere in Hinsicht auf den Anstellwinkel - offenzulassen. Dabei ist anzumerken, dass die im Geschäfts- und Sportflugzeugbau teilweise eingesetzten Verstellluftschrauben (z.B. "Constant Speed Propeller") hier schon wegen der äußerst aufwändigen Regelung nur selten zum Einsatz kommen werden.

Während in der Vergangenheit im Modellflugzeugbau zumeist Verbrennungsmotoren mit hoher Drehzahl eingesetzt wurden, ist seit einiger Zeit ein verstärkter Trend zu Elektromotoren zu registrieren. Dies liegt einerseits daran, dass die Speichermöglichkeit für elektrische Energie durch neuere Batterietechnologie erheblich verbessert wurde, aber andererseits ist auch der Einsatz von Verbrennungsmotoren aus Immissionsschutzgründen (insbesondere Lärm) eher eingeschränkt. Allerdings ist bei Elektromotoren eine optimale Leistungsverwertung insbesondere mit Mehrblattluftschrauben herkömmlicher Bauart sehr schwierig. Deshalb ist es erforderlich, dass die Luftschraubenblätter der Luftschraube in Anpassung an die tatsächlich gegebenen Bedingungen einstellbar ist, wobei die Einstellung einfach sein soll.

In der GB-A-2 140 096 wird ein Propeller für den maritimen Einsatz, also eine Schiffsschraube mit einem Anstell- bzw. Einstellwinkelregelungssystem vorgeschlagen, bei dem die Veränderung des Anstellwinkels mit Hilfe eines Nockenblocks und einer komplizierten Kolbeneinrichtung ausgebildet ist. Einerseits sind dabei die Einstellungen kompliziert mit vier Stiften vorgeschlagen, was im Einsatz einer Luftschraube, insbesondere einer Modellflugluftschraube, kaum realisierbar zu sein scheint und andererseits ist für eine Ausbildung einer Luftschraube unter den Anforderungen der Luftfahrttechnik, insbesondere der Modellflugtechnik, mit den hier vorgegebenen Gewichtsanforderungen die in der GB-A-2 140 096 vorgeschlagenen Lehre kein Vorbild.

Auch in der DE-A-39 01 672 wird ein verstellbarer Schiffspropeller, hier mit justierbaren Anschlägen, vorgeschlagen, bei dem die Propellerblätter über ein Kegelradgetriebe mit einer verdrehbaren Nabe verbunden sind. Die Lehre der DE-A-39 01 672 schlägt Anschläge vor, die die Drehbewegung der Nabe begrenzen und die von aussen zugänglich einzeln einstellbar sind. Auch diese Lösung ist für die Ausbildung einer Luftschraube unter den Anforderungen der Luftfahrttechnik, insbesondere der Modellflugtechnik, mit den hier vorgegebenen Gewichtsanforderungen, kein Vorbild.

Aus dem Vorstehenden ergibt sich die Aufgabe der Erfindung, die darin liegt, eine Luftschraube zur Verfügung zu stellen, die robust im Einsatz ist, bei einer eventuellen Beschädigung aber nicht vollständig zerstört wird und deren Luftschraubenblätter zudem zur Anpassung an unterschiedliche Randbedingungen synchron einstellbar bezüglich des Anstellwinkels sind. Die Luftschraube soll dabei sowohl aus optischen Gründen wie auch aus Gründen des Herstellaufwandes eine komprimierte Bauweise aufweisen.

Wünschenswert ist es zudem, dass über den Bereich der Anstellwinkeleinstellung hinaus ein modularer Aufbau gewährleistet wird, d.h. dass durch Austauschen nur einzelner, einfacher Teile eine Luftschraube mit anderen Eigenschaften (z.B. größerem oder kleinerem Durchmesser) montiert werden kann.

Die Aufgabe wird durch eine Luftschraube nach Anspruch 1 gelöst. Dabei haben die Maßnahmen der Erfindung zunächst einmal zur Folge, dass die Luftschraube modular aufgebaut ist, indem in das Innenteil unterschiedliche Blätter eingelegt werden können. Die Luftschraubenblätter einer modular aufgebauten Luftschraube nach Anspruch 1 sind durch die Maßnahmen der Erfindung synchron und damit leicht einstellbar.

Vorteilhafte Ausführungen sind in den Unteransprüchen dargelegt.

Im Sinne der Erfindung ist es, wenn die synchrone Einstellung des Anstellwinkels mit einem gemeinsamen Hilfsmittel vorgenommen werden kann, das dann gewissermaßen als Antrieb für die Einstellung wirkt, wobei diese Einrichtung vorteilhafterweise auf der Nabenachse der Blattnabe montiert ist. Dieser Antrieb kann gemäß der Erfindung z.B. durch eine Kulissenplatte mit einer Nut gebildet werden, wobei in die Nut am Innenteil der Luftschraubenblätter ausgebildete Noppen eingreifen. Durch diese Bauweise mit einer Kulissenplatte ist ein Aufbau möglich, mit dem durch umgekehrtes Einlegen der Luftschraubenblätter ein Schub anstelle eines Zugs erzeugt wird und dadurch aus einer Zugschraube eine Druckschraube ausgebildet wird.

Besonders vorteilhaft ist es, wenn die Luftschraubcnblätter bei einer Bodenberührung z.B. der Blattspitzen wegen der Unterstützung durch die Anschlagflächen nicht auf Biegung belastet werden.

Die vorgenannten sowie die beanspruchten und in dem nachfolgenden Ausführungsbeispiel beschriebenen, erfindungsgemäß zu verwendenden Elemente unterliegen in ihrer Größe, Formgestaltung und technischen Konzeptionen keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in der - beispielhaft - Ausfilhrungsbeispiele einer erfindungsgemäßen Luftschraube dargestellt sind.

In den Zeichnungen zeigen:
- Fig. 1: eine Explosionszeichnung der erfindungsgemäßen Luftschraube gemäß eines Ausführungsbeispiels;

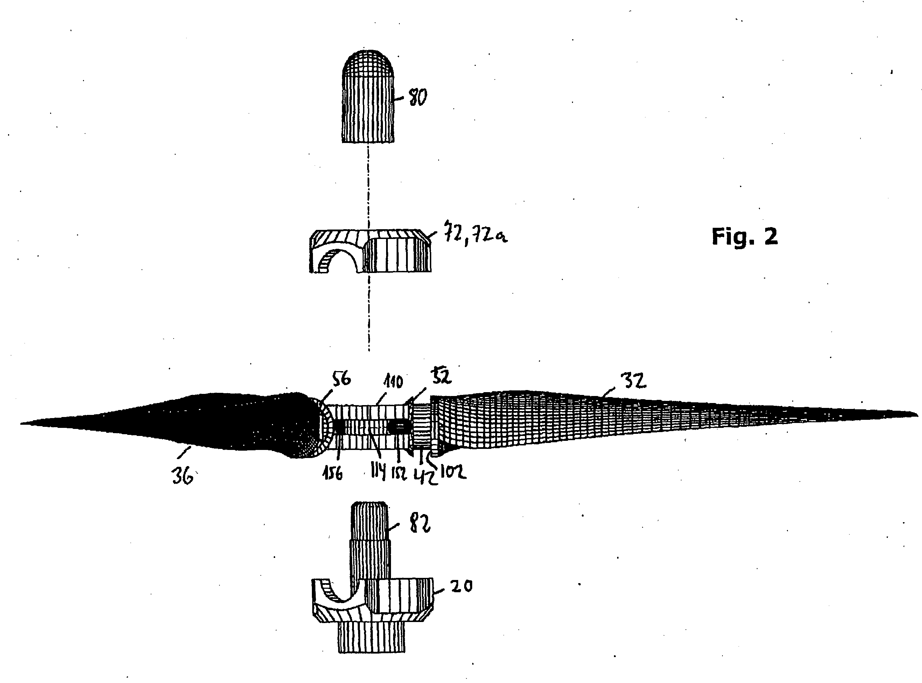

- Fig. 2: eine Ansicht der Luftschraube nach Fig. 4 ohne den Einstellaufsatz und den Spinner von vom;

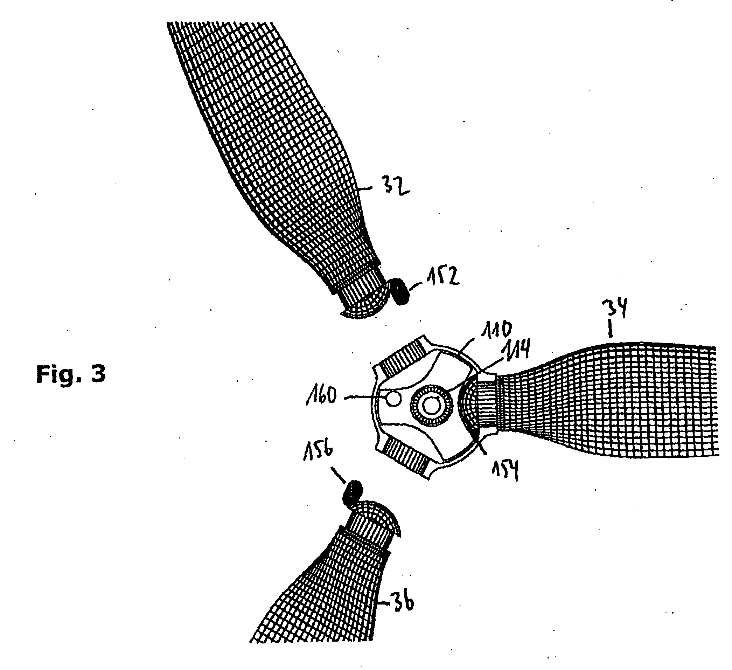

- Fig. 3: eine Schnittzeichnung der Luftschraube nach Fig. 4 von der Seite.

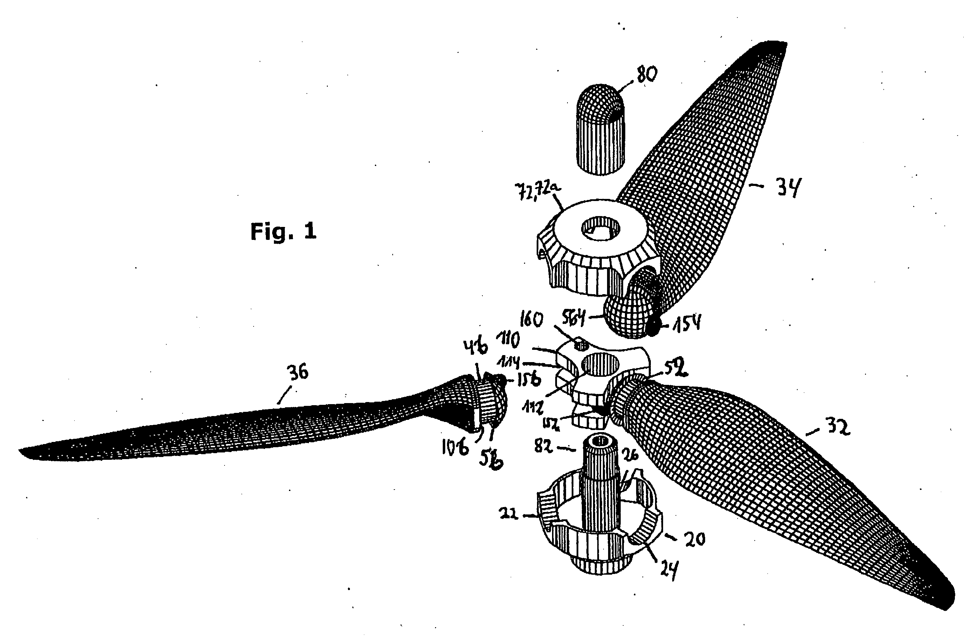

Ein bevorzugtes Ausführungsbeispiel der Luftschraube der Erfindung nach Fig. 1 ist als Dreiblattluftschraube ausgebildet. In diesem Ausführungsbeispiel ist das Prinzip der synchronen Verstellung der Luftschraubenblätter 32, 34 und 36 mit einer auf die Nabenachse 82 aufgesetzten Kulissenplatte 110 ausgestaltet. Die Kulissenplatte 110 hat zum Aufsetzen auf die Nabenachse 82 in der Mitte eine Bohrung 111. In etwa in der Mitte der Dicke der Kulissenplatte 110 ist eine Nut 113 eingelassen. Die sich an die Blattwurzelachsen 42, 44 und 46 anschließenden Kunststoffblöcke 52, 54 und 56 weisen jeweils einen Hebel 152, 154 und 156 auf, die in die in die Kulissenplatte 110 eingelassene Nut 113 so eingepasst ist, dass sich die Luftschraubenblätter 32, 34 und 36 bei einer axialen Bewegung der Kulissenplatte 110 auf der Nabenachse 82 in einem vorgesehenen Bereich synchron drehen. Durch umgekehrtes Einlegen der Luftschraubenblätter 32, 34 und 36 wird beim Betrieb der Luftschraube ein Schub anstelle eines Zugs erzeugt und dadurch kann eine Zugschraube durch einfache Handgriffe in eine Druckschraube umgewandelt wird.

Nach einer synchronen Einstellung der Luftschraubenblätter 32, 34 und 36 können in einer ersten Befestigungsart des Ausführungsbeispiels mit dem Deckel 72, der auf die Nabenachse klemmend oder mit einer Schraube aufgesetzt wird, die Luftschmbenblätter 32, 34 und 36 und damit auch die Kulissenplatte 110 in ihrer Drehrichtung bzw. ihrer axialen Position auf der Nabenachse 82 arretiert werden. Die Luftschraube ist dann fest eingestellt.

In einer zweiten Befestigungsart des Ausführungsbeispiels ist der Deckel 72a ebenfalls auf der Nabenachse befestigt, aber den Luftschraubenblättem 32, 34 und 36 bleibt in den Öffnungen 22, 24 und 26 noch Bewegungsspiel. In dieser Alternative wird die synchrone Einstellung dadurch vorgenommen, dass eine Senkschraube oder eine Madenschraube in einer in die Kulissenplatte 110 eingebrachten Gewindebohrung 160 eingelassen ist, wobei diese Senk- oder Madenschraube einerseits am Deckel 72a und andererseits an der Blattnabe 20 anstößt. Bei der Drehung der Senk- oder Madenschraube 160 durch eine kleine Bohrung im Deckel, die kleiner ist als der Kopf der Senk- oder Madenschraube 160, wird nun die Kulissenplatte 110 in ihrer axialen Position auf der Nabenachse 82 bewegt und mit ihr werden die Luftschraubenblätter 32, 34 und 36 gedreht. Die Senk- oder Madenschraube wirkt also als eine Zugspindel.

Im Ausführungsbeispiel kann durch die Ausbildung eines im Wesentlichen axial (Längsachse der Nabe) bewegbaren Umsetzmittels, beispielsweise in Form einer Kulissenplatte (110), im Zusammenspiel mit einem exzentrisch an der Blattwurzel angeordneten Eingriffselement (152, 154, 156), beispielsweise in Form eines Vorsprungs, eines Hebels, einer Nase o.ä., vorteilhanerweise eine sehr hohe Genauigkeit bei der Einstellung des Anstellwinkels (absolut und untereinander) gewährleistet werden. Hierbei können das Eingriffselement und die Blattwurzel sowie das gesamte Blatt bereits hinsichtlich des Herstellungsprozesses (beispielsweise Spritzguß, usw.) einteilig ausgebildet oder einstückig gefertigt sein, wobei hierfür unterschiedliche Materalien (Mehrkomponentenverfahren) oder identische Materialien gewählt werden können, so dass vorteilhafterweise Herstellung und Bauart weiter vereinfacht werden.

Bei der Einstellbarkeit über ein Umsetzmittels wirkt sich besonders vorteilhaft aus, dass eine für eine hohe Genauigkeit nötige Untersetzung der Bewegung von der Gewindesteigung der Schraube (und Bohrloch/Einsatzloch) abhängt, so dass bei entsprechend gewählter geringer Gewindesteigung das Umsetzmittel (110) trotz mehrerer Schraubenumdrehungen nur Bruchteile eines Zentimeters, beispielsweise Zehntel oder Hundertstel bewegt wird bzw. innerhalb eines möglichen Einstellbereiches eines Anstellwinkels von beispielsweise 28° eine (synchrone) Stellgenauigkeit der Blätter zueinander von mindestens +/- 0,7° oder gar +/- 0,3° erricht werden kann. Weiterhin ist es technisch wenig aufwendig, eine exakte Fassung des Eingriffsmittels (152, 154, 156) in dem Umsetzmittel (110) zu schaffen, um diese geringen Bewegungen möglichst ohne Spiel in eine axiale Drehung der Flügelblätter umzusetzen bzw. den Anstellwinkel der Blätter zu verändern.

Durch diese Art der Einstellung des Anstellwinkels mittels eines Umsetzmittels (110), wie einer Kulissenplatte, welches über ein im Wesentlichen in Nabenachse (82) wirkendes Schraubmittel relativ zu dieser Achse bewegbar bzw. einstellbar ist, kann zusätzlich verhindert werden, dass die Antriebsschraube infolge falschen Einsetzens mehrerer Schraubenblätter (32, 34, 36, 38) (untereinander) unterschiedliche Anstellwinkel der Schraubenblätter (32, 34, 36, 38) aufweist Die synchrone Lage der Schraubenblätter (32, 34, 36, 38) stellt sich durch das Eingreifen des Eingriffselements (152, 154, 156) in eine entsprechende Aussparung des Umsetzmittels (110), wobei dieser Eingriff in Längsrichtung der Nabe ohne Spiel erfolgt, automatisch ein, ohne dass ein unerwünschtes falsches, beispielsweise um ein oder mehrere Zähne versetztes Einsetzen möglich ist

Zudem kann in dieser Ausführungsform ein unerwünschtes Verstellen trotz Auf- oder Abschrauben des Spinners verhindert werden, ohne dass ein Kontern des Einstellsegments gegen unerwünschtes Verdrehen nötig ist. Das Einstellen der Anstellwinkel kann somit auch ohne Lösen eines eventuell vorhandenen Spinners und somit ohne Zerlegen bei einer komplett montierten Antriebsschraube erfolgen.

In bevorzugter Ausführungsform der Erfindung ist der stirnseitige Abschluß, an dem sich das Eingriffselement befindet, pilz- bzw. kuppelförmig ausgebildet, so dass das Blatt hinsichtlich einer aufgrund der Zentrifugalkraft entstehenden Zugbelastung in Längsrichtung des Blattes bei geringsten Abmessungen besonders widerstandsfähig ist.

Weitere Vorteile dieser Ausführungsform ergeben sich aus der einfacheren Bauweise und Fertigung.

Ein Eingriffselement, welches innerhalb einer Toleranz für einen Passsitz geringfügig größer als die entsprechende Ausnehmung in dem Umsetzmittel gefertigt werden kann, ist einfach und robust in Herstellung und Betrieb. Aber selbst eine exakte Fertigung bedarf eines vergleichsweise geringen Aufwands. Die wesentlich höhere Genauigkeit der Einstellbarkeit, die gleichzeitig ein Spiel im Betrieb verhindert, wird in der Ausführungsform allein durch die entsprechend klein gewählte Gewindesteigung des Schraubenelements, beispielsweise Madenschraube, und Gewinde im Bohrloch hierfür gewährleistet, welche in einfacher Weise aus harten Stoffen, beispielsweise Metall, insbesondere dem vorteilhafterweise leichten Aluminium hergestellt werden kann, oder als Fertigteil in Massenproduktion zu beziehen ist.

Der Einsatz der Kulissenplatte 110 ermöglicht aber auch die Ausgestaltung einer Luftschraube, deren Luftschraubenblätter 32, 34 und 36 sich beim Betrieb verstellen lassen. Eine erste Verstellart ist so auszugestalten, dass zwischen der Kulissenplatte 110 und dem Boden Blattnabe eine Feder - im Ausführungsbeispiel eine Spiralfeder - oder ein ähnlich wirkendes Mittel vorgesehen ist. Da beim Betrieb der Luftschraube eine Drehkraft auf die Luftschraubenblätter 32, 34 und 36 wirkt, stellt sich mit der Feder ein Kräftegleichgewicht ein, das von der Last der Luftschraube abhängt. Wenn z.B. die Last im Sturzflug eines Flugmodells eher gering ist, kann mit der Feder erreicht werden, dass sich die Luftschraubenblätter 32, 34 und 36 in die Strömungsrichtung steiler einstellen.

Eine zweite Verstellart kann so ausgestaltet werden, dass die Kulissenplatte 110 mit einem Servomotor verbunden wird und der Anstellwinkel elektromechanisch entweder mit einem an Bord befindlichen Mikrocomputer oder durch eine Funkfernsteuerung kontrolliert eingestellt wird.

Für den Fachmann sollte es klar sein, dass die in dieser Schrift offenbarten Merkmale auch in unterschiedlicher Kombination, auch in Kombination mit ihm bereits bekannten Merkmalen kombiniert werden können, sofern das spezielle Problem dies erfordert.

Insbesondere wird ausdrücklich darauf hingewiesen, dass die im Ausführungsbeispiel als Luftschraube für ein Modellflugzeug beschriebene Erfindung nicht auf diesen Anwendungszweck begrenzt ist. Eine Luftschraube nach der Erfindung ist vielmehr als Antriebsschraube für bewegliche Körper, wie Flugzeuge, Schiffe, usw. in allen gasförmigen Medien, wie beispielsweise Luft, Gas, denkbar. Ebenso kann eine solche Antriebsschraube, beispielsweise in einer Pumpe, auch die Bewegung des Mediums selbst bewirken, während die Luftschraube ortsfest (in Längsrichtung) auf einer Welle rotiert. Weiterhin ist es denkbar, die erfindungsgemäße Luftschraube für ein Windkraftwerk zu verwenden.

Bei all diesen nicht abschließend aufgezählten Verwendungen ist es ebenso wie im geschilderten Ausführungsbeispiel von Vorteil, wenn der Anstellwinkel der Schraubenblätter auf einfache Weise ohne Demontage an die Relativgeschwindigkeit zum umgebenden Medium angepasst werden kann.

## Patentansprüche

1. Luftschraube, insbesondere zum Antrieb von Modellflugzeugen, mit
- einer Blattnabe (20), die auf die Antriebswelle eines Motors aufbringbar ist, wobei die Blattnabe (20) eine Nabenachse (82) in der Verlängerung der Antriebswelle aufweist,
- mindestens zwei Schraubenblättern (32, 34, 36, 38), die an der Blattnabe (20) angebracht sind, wobei
- die Blattnabe (20) entsprechend der Anzahl der Luftschraubenblätter (32, 34, 36, 38) Öffnungen (22, 24, 26, 28) aufweist,
- die Luftschraubenblätter (32, 34, 36, 38) an ihren proximalen, der Blattnabe zugewandten Seiten Blattwurzelachsen (42, 44, 46, 48) aufweisen, die in die Öffnungen (22, 24, 26, 28) in der Blattnabe (20) eingebracht werden, und
- die Schraubenblätter (32, 34, 36, 38) Haltemittel (52, 54, 56, 58) aufweisen, mit denen die Schraubenblätter (32, 34, 36, 38) gegenüber radial nach außen wirkenden Kräften an der Blattnabe (20) gehalten werden,
- wobei die Haltemittel (52, 54, 56, 58) Mittel aufweisen, mittels derer die Schraubenblätter (32, 34, 36, 38) bezüglich ihrer Anstellwinkel automatisch synchronsierend eingebracht und verstellt werden können,
**gekennzeichnet durch**
ein Umsetzmittel, insbesondere eine in etwa kreisförmige Kulissenplatte (110),
- die im Außenbereich Aussparungen (120, 122, 124) zur Aufnahme der Blattwurzelachsen (42, 44, 46) und der Haltemittel (52, 54, 56, 58) aufweist,
- die in ihrer radialen Mitte eine Bohrung (112) aufweist, über die das Umsetzmittel (110) auf die Nabenachse (82) aufgesteckt werden kann und
- die weiterhin eine Nut (114) aufweist, die in etwa in der axialen Mitte des Umsetzmittels eingelassen ist,
wobei die Mittel, mit denen die Anstellwinkel der Schraubenblätter (32, 34, 36, 38) synchron verstellt werden können, als jeweils in etwa an der gleichen Position an den Haltemitteln angebrachte Eingriffselemente, insbesondere Hebel (152, 154, 156) ausgebildet sind, die so in die in das Umsetzmittel (110) eingelassene Nut (114) einpassen, daß **durch** eine axiale Veränderung der Position des Umsetzmittels auf der Nabenachse (82) der Anstellwinkel der Schraubenblätter (32, 34, 36) synchron verstellbar ist.

2. Luftschraube nach Anspruch 1, **gekennzeichnet durch** ein Befestigungsmittel (72), mit dem der Anstellwinkel der Schraubenblätter (32, 34, 36) sowie die Position des Umsetzmittels (110) nach der Einstellung klemmend befestigt werden kann.

3. Luftschraube nach Anspruch 1, **gekennzeichnet durch** ein Befestigungsmittel (72a), das an der Blattnabe (20) befestigbar ist, **durch** das die Schraubenblätter (32, 34, 36) in ihrer Position befestigt werden, aber der Anstellwinkel der Schraubenblätter (32, 34, 36) **durch** die Position des Umsetzmittels (110) einstellbar bleibt.

4. Luftschraube nach Anspruch 2 oder 3, **gekennzeichnet durch** eine Schraube, die in einer Gewindebohrung (160) in das Umsetzmittel (110) so eingelassen ist, daß mit ihr die axiale Position des Umsetzmittels (110) und damit der Anstellwinkel der Schraubenblätter (32, 34, 36) einstellbar ist.

5. Luftschraube nach Anspruch 4, **dadurch gekennzeichnet**, - daß das Befestigungsmittel (72, 72a) an der Position der Schraube eine Bohrung aufweist, durch die hindurch die Schraube mit einem geeigneten Hilfsmittel gedreht werden kann,
- daß die in das Umsetzmittel (110) eingelassene Schraube an der Blattnabe und an dem Befestigungsmittel (72, 72a) anstößt, wobei die Bohrung im Befestigungsmittel (72, 72a) kleiner ist als der Kopf der Schraube.

6. Luftschraube nach Anspruch 3, **gekennzeichnet durch** ein Rückstellmittel, insbesondere eine Feder, mit der das ansonsten bewegliche Umsetzmittel (110) nach vorne oder hinten gedrückt wird.

7. Luftschraube nach Anspruch 3, **dadurch gekennzeichnet, daß** das Umsetzmittel mit einem Steuermechanismus mechanisch verbunden ist, über den die Schraube bei ihrem Betrieb einstellbar ist.

8. Luftschraube nach einem der vorstehenden Ansprüche, **dadurch gekennzeichnet, daß** die Öffnungen (22, 24, 26, 28) in der Blattnabe (20) als nutförmige Langlöcher ausgebildet sind.

9. Luftschraube nach einem der vorstehenden Ansprüche, **dadurch gekennzeichnet, daß** die Blattnabe (20) und die Schraubenblätter (32, 34, 36, 38) jeweils Anschlagflächen (102, 104, 106, 108; 112, 114, 116, 118) zur Vermeidung oder Verringerung von Axialbewegungen der Luftschraubenblätter (32, 34, 36, 38) bei auf diese wirkenden axialen Kräften aufweisen.

10. Luftschraube nach einem der vorstehenden Ansprüche, **gekennzeichnet durch** einen Spinner (80), der auf dem distalen Ende der Nabenachse (82) befestigt ist.

## Claims

1. A propeller, in particular for the propulsion of model aircraft with
- a blade hub (20), which can be attached to the drive shaft of a motor, wherein the blade hub (20) has a hub shaft (82) in an extension of the drive shaft,
- at least two propeller blades (32, 34, 36, 38), which are attached to the blade hub (20), wherein
- the blade hub (20) has openings (22, 24, 26, 28) corresponding to the number of propeller blades (32, 34, 36, 38),
- the propeller blades (32, 34, 36, 38) on their proximal sides facing the blade hub (20) have blade root shafts (42, 44, 46, 48), which are inserted into the openings (22, 24, 26, 28), and
- the propeller blades (32, 34, 36, 38) have means of holding (52, 54, 56, 58), with which the propeller blades (32, 34, 36, 38) are held against forces acting radially outward at the blade hub (20),
- wherein the means of holding (52, 54, 56, 58) have means, by which the propeller blades (32, 34, 36, 38) can be inserted and adjusted in automatic synchronisation with regard to their pitch angles,
**characterised in that** a means of conversion, in particular a connecting plate (110) approximately circular in shape,
- which in the outer zone has cut-outs (120, 122, 124) to receive the blade root shafts (42, 44, 46) and the means of holding (52, 54, 56, 58),
- which in its radial centre has a bore (112), by means of which the means of conversion (110) can be placed onto the hub shaft (82), and
- which furthermore has a groove (114), which is let into the axial centre of the means of conversion, wherein the means, with which the pitch angles of the propeller blades (32, 34, 36, 38) can be synchronously adjusted, are formed as engagement elements inserted in each case in approximately at the same position on the means of holding, in particular as levers (152, 154, 156), which fit into the groove (114) let in to the means of conversion (110), such that by an axial variation of the position of the means of conversion on the hub shaft (82) the pitch angle of the propeller blades (32, 34, 36) is synchronously adjustable.

2. The propeller according to Claim 1, **characterised by** a means of securing (72) with which the pitch angle of the propeller blades (32, 34, 36) as well as the position of the means of conversion (110) can be secured by clamping after the adjustment.

3. The propeller according to Claim 1, **characterised by** a means of securing (72a) that can be secured to the blade hub (20), by which the propeller blades (32, 34, 35 36) are secured in their position, but the pitch angle of the propeller blades (32, 34, 36) remains adjustable via the position of the means of conversion (110).

4. The propeller according to Claim 2 or 3, **characterised by** a screw, which is let into the means of conversion (110) in a threaded bore (160) such that with it the axial position of the means of conversion (110) can be adjusted, and with it the pitch angle of the propeller blades (32, 34, 36).

5. The propeller according to Claim 4,
**characterised in that**
- the means of securing (72, 72a) has a bore at the position of the screw, through which the screw can be rotated with a suitable tool.
- the screw let into the means of conversion (110) abuts upon the blade hub and the means of securing (72, 72a), wherein the bore in the means of securing (72, 72a) is smaller than the head of the screw.

6. The propeller according to Claim 3,
**characterised by** a restoring means, in particular a spring, with which the otherwise movable means of conversion (110) is pressed forward or rearward.

7. The propeller according to Claim 3,
**characterised in that** the means of conversion is mechanically connected with a control mechanism, via which the propeller can be adjusted while in operation.

8. The propeller according to one of the previous claims,
**characterised in that** the openings (22, 24, 26, 28) in the blade hub (20) are formed as groove-shaped long holes.

9. The propeller according to one of the previous claims,
**characterised in that** the blade hub (20) and the propeller blades (32, 34, 36, 38) have in each case stop faces (102, 104, 106, 108; 112, 114, 116, 118) for the avoidance or reduction of axial movements of the propeller blades (32, 34, 36, 38) caused by axial forces acting on the latter.

10. The propeller according to one of the previous claims,
**characterised by** a spinner (80), which is secured to the distal end of the hub shaft (82).

## Revendications

1. Hélice pour l'entraînement de maquettes d'avion, comprenant
- un moyeu de pale (20), qui est appliqué sur l'arbre d'entraînement d'un moteur, le moyeu de pale (20) présentant un axe de moyeu (82) dans le prolongement de l'arbre d'entraînement,
- au moins deux pales d'hélice (32, 34, 36, 38), qui sont placées sur le moyeu de pale (20),
- le moyeu de pale (20) présentant des ouvertures (22, 24, 26, 28) en fonction du nombre des pales d'hélice (32, 34, 36, 38),
- les pales d'hélice (32, 34, 36, 38) présentant sur leurs côtés proximaux, tournés vers le moyeu de pale, des axes de racine de pale (42, 44, 46, 48) qui sont introduits dans les ouvertures (22, 24, 26, 28) dans le moyeu de pale (20), et
- les pales d'hélice (32, 34, 36, 38) présentant des moyens de retenue (52, 54, 56, 58) avec lesquels les pales d'hélice (32, 34, 36, 38) sont maintenues sur le moyeu de pale (20) par rapport à des forces agissant radialement vers l'extérieur,
- les moyens de retenue (52, 54, 56, 58) présentant des moyens, au moyen desquels les pales d'hélice (32, 34, 36, 38) peuvent être introduites et réglées avec une synchronisation automatique en ce qui concerne leurs angles d'incidence,
**caractérisée par**
- un moyen de déplacement, en particulier une plaque à coulisses (110) à peu près circulaire,
- qui présente dans la zone extérieure des évidements (120, 122 et 124) pour le logement des axes de racine de pale (42, 44, 46), et des moyens de retenue (52, 54, 56, 58),
- qui présente en son centre radial un alésage (112) par lequel le moyen de déplacement (110) prend peut être emboîté sur l'axe de moyeu (82) et
- qui présente également une rainure (114) qui est enchâssée à peu près dans le centre axial du moyen de déplacement, les moyens, avec lesquels les angles d'incidence des pales d'hélice (32, 34, 36, 38) peuvent être réglés de façon synchrone, étant réalisés sous la forme d'éléments d'engagement placés à peu près à la même position sur les moyens de retenue, en particulier des leviers (152, 154, 156), qui s'emboîtent dans la rainure (114) enchâssée dans le moyen de déplacement (110) de telle sorte que, par une variation axiale de la position du moyen de déplacement sur l'axe de moyeu (82), l'angle d'incidence des pales d'hélice (32, 34, 36) peut être réglé de façon synchrone.

2. Hélice selon la revendication 1, **caractérisée par** un moyen de fixation (72), avec lequel l'angle d'incidence des pales d'hélice (32, 34, 36) ainsi que la position du moyen de déplacement (110) peuvent être fixés par blocage après le réglage.

3. Hélice selon la revendication 1, **caractérisée par** un moyen de fixation (72a) qui peut être fixé sur le moyeu d'hélice (20), par lequel les pales d'hélice (32, 34, 36) sont fixées dans leur position, mais l'angle d'incidence des pales d'hélice (32, 34, 36) reste réglable par la position du moyen de déplacement (110).

4. Hélice selon la revendication 2 ou 3, **caractérisée par** une hélice, qui est enchâssée dans un alésage fileté (160) dans le moyen de déplacement (110) de telle sorte que, avec elle, la position axiale du moyen de déplacement (110) et donc l'angle d'incidence des pales d'hélice (32, 34, 36) peuvent être réglés.

5. Hélice selon la revendication 4, **caractérisée en ce que** le moyen de fixation (72 et 72a) présente sur la position de la vis un alésage par lequel l'hélice peut être tournée avec un moyen auxiliaire approprié,
**en ce que** l'hélice enchâssée dans le moyen de déplacement (110) bute sur le moyeu de pale et sur le moyen de fixation (72 et 72a), l'alésage dans le moyen de fixation (72 et 72a) étant inférieur à la tête de la vis.

6. Hélice selon la revendication 3, **caractérisée par** un moyen de rappel, en particulier un ressort, avec lequel le moyen de déplacement (110) mobile par ailleurs est appuyé vers l'avant ou vers l'arrière.

7. Hélice selon la revendication 3, **caractérisée en ce que** le moyen de déplacement est relié mécaniquement à un mécanisme de commande par lequel la vis peut être réglée lors de son fonctionnement.

8. Hélice selon l'une quelconque des revendications précédentes, **caractérisée en ce que** les ouvertures (22, 24, 26,28) sont réalisées dans le moyeu de pale (20) sous la forme de trous oblongs en forme de rainure.

9. Hélice selon l'une quelconque des revendications précédentes, **caractérisée en ce que** le moyeu de pale (20) et les pales d'hélice (32, 34, 36,38) présentent respectivement des surfaces de butée (102, 104, 106, 108 ; 112, 144, 116, 118) afin d'éviter ou de réduire des déplacements axiaux des pales d'hélice (32, 34, 36, 38) dans le cas de forces axiales existant sur ces pales.

10. Hélice selon l'une quelconque des revendications précédentes, **caractérisé par** un capot de moyeu d'hélice (spinner) (80) qui est fixé sur l'extrémité distale de l'axe du moyeu (82).
